# EUROPEAN PATENT APPLICATION

(11) **EP 1 997 545 A2**
(43) Date of publication of application: **03.12.2008**
(21) Application number: 08009658.9
(22) Date of filing: 27.05.2008
(51) Int. Cl.: B01D 5/00

(54) **Controlling condensation in combination with evaporation**

(30) Priority: 28.05.2007 JP 2007140521
(71) Applicant: Hitachi Plant Technologies, Ltd., Toshima-ku Tokyo 170-8466 (JP)
(72) Inventor: Ito, Yuzuru, Tokyo 170-8466 (JP); Endo, Yoshishige, Tokyo 170-8466 (JP); Tsudome, Hidekazu, Tokyo 170-8466 (JP); Numajuri, Fumiaki, Tokyo 170-8466 (JP)
(74) Representative: Beetz & Partner

(57) **Abstract**

There is provided a liquid condensation system including liquid condensers (10) which evaporates a volatile component of a liquid to be processed under a decompressed atmosphere to condense the liquid, and the system includes: decompressing means (103) which decompresses the inside of each liquid condenser; heating means (94) which is provided for separating the volatile component from the liquid to be processed in each liquid condenser; and cooling means (96) which cools the component volatilized from the liquid to be processed. Each liquid condenser has a triple-pipe structure configured by arranging three pipes (11, 30, 31) with different diameters, the heating means (94) can supply a high-temperature heating medium to a space surrounded by an outer pipe and an intermediate pipe, and the decompressing means can decompress a space between the intermediate pipe and an inner pipe and the inside of the inner pipe.

## Description

### Background of the Invention

The present invention relates to a liquid condensation system and a liquid condensation method in which a liquid is condensed by evaporation from a liquid surface.

As a conventional method of condensing a liquid, JP-A 2004-344700 discloses a method by which a liquid is put and heated in a container with a capacity of several tens of liters to several hundreds of liters and the pressure inside the container is decompressed to evaporate the liquid. Specifically, a volatile component is evaporated by decompression and heating, vapor of the volatile component is cooled and collected at subsequent units, and a condensed nonvolatile component remains in the container.

Inliquid condensation,improvement ofheating efficiency and reduction in time for condensation are required. In the conventional technique disclosed in JP-A 2004-344700, the following two problems are present: (1) a hot spot (where a temperature is higher than those of surrounding areas) is formed in the vicinity of a wall face of the container into which a heater is introduced, so that it is impossible to uniformly heat the inside of the container, and thus heating efficiency becomes poor; and (2) although it is necessary to reduce the container in size in order to uniformly heat the inside of the container, if the container is reduced in size, an area of a vapor-liquid interface necessary for evaporation of a liquid is reduced, resulting in less evaporation amount and increased time for condensation. Accordingly, it is difficult to achieve the improvement of heating efficiency and reduction in time for condensation at the same time.

As a method of widening an area of the vapor-liquid interface, there is a method called a rotary evaporator in which a thin liquid membrane adherent to a wall face of a flask is evaporated by rotating the flask. However, due to difficulty of heating caused by the rotation of the flask, it is impossible to reduce a time for condensation by improvingheating efficiency, and a space necessary for the rotation of the flask is required.

Further, conditions of the liquid membranes formed differ depending on liquids to be condensed. Thus, there is a problem that an operator always needs to monitor and to manually adjust the operation, resulting in difficulty of a long-time continuous operation.

In addition, although the viscosity of a condensed liquid becomes high when the liquid is condensed to a high concentration, the liquid with a high viscosity is adherent to a surface of the flask to reduce heat transfer efficiency, thus making it difficult to perform subsequent steps of condensation. Further, a step of extracting a condensed liquid with a high viscosity from the flask requires a lot of time.

### Brief Summary of the Invention

An object of the present invention is to provide a liquid condenser in which a liquid is efficiently and uniformly heated in a short period of time, vapor can be reliably separated from a condensed liquid, and even a liquid with a high viscosity can be easily extracted. Further, the present invention allows a condensation system to automatically perform a condensation process using the liquid condenser.

According to an aspect of the present invention for achieving the above-described obj ect, there is provided a liquid condensation system including liquid condensers which evaporates a volatile component of a liquid to be processed under a decompressed atmosphere to condense the liquid, the system including: decompressing means which decompresses the inside of each liquid condenser; heating means which is provided for separating the volatile component from the liquid to be processed in each liquid condenser; cooling means which cools the component volatilized from the liquid to be processed; a condensed-liquid buffer tank which collects a condensed liquid produced by volatilizing and condensing the volatile component from the liquid to be processed; vapor liquid buffer tank which collects a vapor liquid produced from the volatile component cooled by the cooling means; measuring means which measures the concentration of the condensed liquid and the temperature of each liquid condenser; and control means which controls the concentration of the condensed liquid on the basis of the temperature of each liquid condenser measured by the measuring means.

According to this aspect, it is desirable that each liquid condenser has a triple-pipe structure configured by arranging three pipes with different diameters, the heating means can supply a high-temperature heating medium to a space surrounded by an outer pipe and an intermediate pipe, the decompressing means can decompress a space between the intermediate pipe and an inner pipe and the inside of the inner pipe, a lid member through which the liquid to be processed flows is arranged at an upper end of the intermediate pipe, plural fine grooves arranged in a radial manner are formed on the lid member, plural fine grooves are formed on an inner circumferential face of the intermediate pipe, and after the liquid is fed to the entire circumference of the intermediate pipe by utilizing a capillary phenomenon, the liquid to be processed is evaporated in the grooves of the intermediate pipe so as to be collected by the inner pipe.

Further, it is preferable that a buffer portion is provided at a condensed-liquid discharge pipe of each liquid condenser, openable and closable valves are arranged on the inlet side and the outlet side of the buffer portion, and vapor is prevented frombeingmixedwith the condensed liquid by alternately opening and closing the valves. In addition, it is preferable that a bottom face of the intermediate pipe of each liquid condenser is provided as an inclined face whose surface is treated by mirror polishing, and the heating means heats the inclined face to reduce the viscosity of the condensed liquid.

According to this aspect, it is desirable that each liquid condenser includes: a groove-formed pipe having plural grooves extending in the vertical direction formed on the inner circumferential side; an outer pipe which is substantially concentric with the groove-formed pipe and is arranged on the outer circumferential side of the groove-formed pipe; and a member which is arranged at a substantially center portion on the inner circumferential side of the groove-formed pipe and leads the volatile component of the liquid to be processed supplied to the inside of the groove-formed pipe to the outside, a space separated from the inside of the groove-formed pipe is formed between the grooved-formed pipe and the outer pipe, the heating means supplies warm water to the space, means for measuring the pressure of the inside of the groove-formed pipe and a member through which the volatile component of the liquid to be processed flows are provided to each liquid condenser, and a flow rate adjusting valve is provided along the member. Further, it is preferable that outputs of the pressure measuring means and the temperature measuring means are input to the control means so as to control the flow rate adjusting valve. Plural liquid condensers may be provided, and the liquid to be processed may be led to the plural liquid condensers in parallel through the buffer portion.

According to another aspect of the present invention, there is provided a liquid condensation method by which a volatile component of a liquid to be processed is evaporated under a decompressed atmosphere to condense the liquid using liquid condensers, wherein warm water is supplied from a lower portion of an outer pipe to a space formed between the outer pipe and a groove-formed pipe of each liquid condenser and is discharged from an upper portion of the outer pipe, the warm water is circulated by a warm water circulation system, and the pressure of a processing space formed on the inner circumferential side of the groove-formed pipe included in each liquid condenser is adjusted on the basis of a measured temperature of the circulated warm water.

According to this aspect, it is desirable that a flow rate adjusting valve is attached to each liquid condenser, the pressure of the processing space is controlled by adjusting the opening of the flow rate adjusting valve, and a liquid surface of the liquid to be processed supplied to the groove-formed pipe is evaporated without boiling. In addition, it is desirable that vacuum discharge means is attached to the liquid condensers, and the pressure of the processing space is allowed to be a decompressed atmosphere by the vacuum discharge means.

According to the present invention, only by providing a power necessary for feeding the liquid to the fine grooves, a static condenser that allows for stable condensation can be obtained. Further, by forming the thin membranes of the liquid at the bottoms of the fine grooves, it is possible to facilitate heat transfer. In addition, improvement of heating efficiency and reduction in time for condensation can be achieved at the same time, and by arranging the grooves at the circumference, it is possible to increase a processing amount per volume, thus downsizing the system. In addition, portions in the liquid condenser with which the liquid after condensation is brought into contact are all formed as inclined channels whose temperatures can be adjusted and which are treated by mirror polishing. Accordingly, even a condensed liquid with a high viscosity and a high concentration can be smoothly discharged outside the liquid condenser, so that the liquid condenser can process a liquid with various concentrations and viscosities.

Furthermore, since the liquid is independently condensed in the respective grooves, the liquid condensers with different processing amounts can be easily obtained by increasing or decreasing the number of grooves as long as conditions of condensation in the respective grooves are once obtained.

In addition, a single liquid condenser is provided or plural liquid condensers are arranged in parallel, and a mechanism for uniformly feeding the liquid to the liquid condenser(s) and a mechanism for automatically controlling a flow rate by measuring the concentration of the liquid are added, so that a condensation system which can automatically condense a great amount of liquid to a desired concentration can be obtained.

### Brief Description of the Several Views of the Drawing

Fig. 1 is a block diagram showing an embodiment of a liquid condensation system according to the present invention;
Fig. 2 is an exterior perspective view of a liquid condenser used for the liquid condensation system in Fig. 1;
Fig. 3 is a cross sectional view taken along the line A-A shown by the arrows in Fig. 2;
Fig. 4 is a perspective view of an upper lid for a groove-formed pipe included in the liquid condenser in Fig. 3; and
Fig. 5A is a perspective view of a groove-formed pipe, and Fig. 5B is a top plan view thereof.

### Detailed Description of the Invention

Hereinafter, there will be described an embodiment in which vinegar is used as a condensation target and a specific volatile component is extracted for condensation from an undiluted solution of vinegar, and a liquid to be condensed may be a liquid mixture obtained by mixing liquids having different boiling points with each other. In this case, a liquid having a lower boiling point serves as a volatile component, and another liquid having a higher boiling point serves as a nonvolatile component.

### (First embodiment)

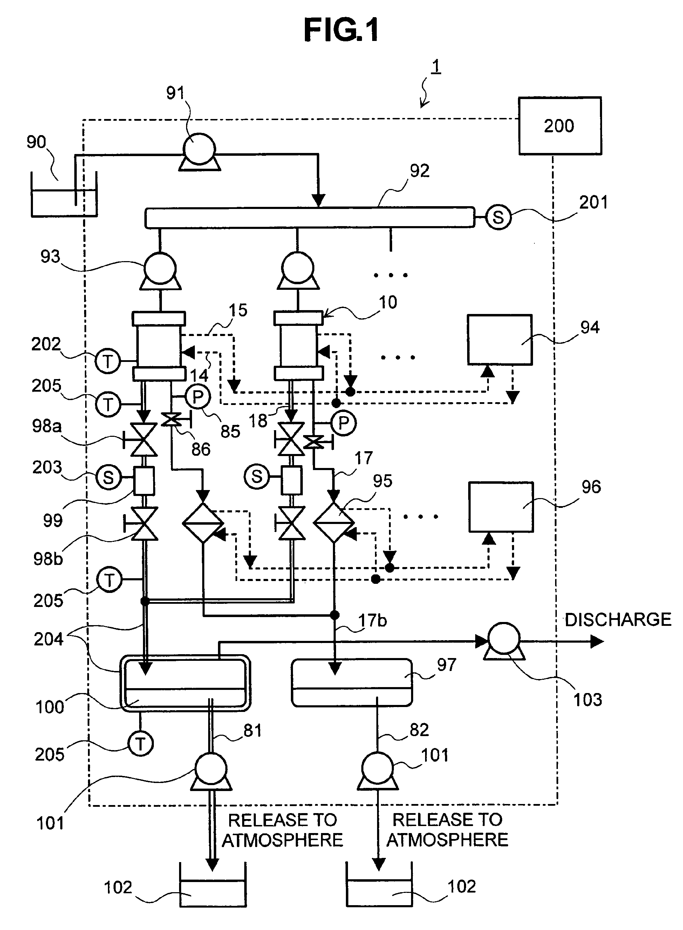

Fig. 1 is a block diagram showing an embodiment of a liquid condensation system 1 according to the present invention. Referring to Fig. 1, the reference numeral 10 denotes a liquid condenser that condenses a liquid by evaporating a volatile component contained in the supplied liquid, 90 denotes a raw material tank that accommodates therein the liquid to be condensed, 91 denotes a rawmaterial supplying pump that supplies the liquid, 92 denotes a raw material buffer that temporarily stores therein the supplied liquid to uniform flow rates of the liquid to the respective liquid condensers, 93 denotes a flow-rate adjusting pump that is provided for each liquid condenser to feed the liquid to each liquid condenser at a desired flow rate, 94 denotes a warm water circulation system that supplies warm water to heat the liquid condensers, 95 denotes a heat exchanger that cools vapor of the volatile component discharged from the liquid condensers 10 down to its dew point or lower for liquefaction, 96 denotes a coolingwater circulation system that supplies a cooling water to the heat exchangers 95, and 97 denotes a vapor liquid tank that stores therein the liquefied volatile component.

The reference numerals 98a and 98b denote vapor flow-in prevention valves that prevent vapor from flowing into condensed-liquid lines, 99 denotes a transparent pipe used for observing the level of the condensed liquid, 100 denotes a condensed-liquid tank that stores therein the condensed liquid, 101 denotes a discharge pump that discharges each liquid stored in the condensed-liquid tank 100 and the vapor liquid tank 97 that are under the vacuum atmospheres to the atmospheric pressure, 102 denotes a storage container that stores therein each liquid discharged from the discharge pump 101, 103 denotes a vacuum pump that decompresses flow channels ranging from the raw material buffer 92 to the vapor liquid tank 97 and the condensed-liquid tank 100 from the downstream side so as to move the liquid and to form the vacuum atmospheres, 200 denotes a control unit that is configured by a small personal computer and controls the whole system enclosed by the chained line in Fig. 1, 201 denotes a water level sensor 201 that measures a level in the raw material buffer, 202 denotes a condenser-temperature sensor that measures the temperature of each liquid condenser 10, 203 denotes a condensed-liquid level sensor that measures the level of the condensed liquid, 204 denotes a temperature-adjusting heater that is provided for temperature adjustment of the condensed-liquid flow channels and the condensed-liquid tank 100 shown by the double lines in Fig. 1, and 205 denotes a temperature-adjusting temperature sensor that measures the temperatures of the condensed-liquid flow channels and the condensed-liquid tank 100 whose temperatures are adjusted by the temperature-adjusting heater 204.

Vinegar that is a target to be condensed is moved to the raw material buffer 92 from the raw material tank 90 by the raw material supplying pump 91 at an arbitrary flow rate. For the raw material supplying pump 91, a tube pump is used in which a tube is squeezed by a roller arranged at a circumference so as to feed the liquid. Thereby, the roller closes the tube when no liquid is fed, and as a result, a pressure difference caused by the vacuum pump 103 can prevent supplying of an excessive amount of liquid.

The raw material buffer 92 has a cylindrical shape in such a manner that both ends of a pipe are closed, and is provided with plural joints so as to be attached to plural liquid condensers 10 in parallel, thereby easily increasing or decreasing the number of liquid condensers 10 in accordance with processing amounts of the liquid. Since plural liquid condensers 10 are provided, even when one of the liquid condensers 10 breaks down, the other liquid condensers 10 substitute for the broken one, thereby continuing the condensation process. In the embodiment, there will be described a case in which two liquid condensers 10 are attached.

When a constant amount of vinegar supplied to the raw material buffer 92 is accumulated, the water level sensor 201 detects the accumulation, and the control unit 200 that receives a signal from the water level sensor 201 actuates the flow-rate adjusting pumps 93. Then, the control unit 200 controls the flow-rate adjusting pumps 93 so that the liquid level in the raw material buffer 92 becomes constant. Thereby, it is possible to balance between a supplying amount of vinegar and a discharge amount thereof, thus equalizing the amounts of the liquid supplied to the respective liquid condensers 10. As will be described later, if the flow rate of vinegar that passes through the liquid condensers 10 is decreased, the concentration of vinegar is increased. On the contrary, if the flow rate thereof is increased, the concentration thereof is decreased.

A pressure (negative pressure) generated by the vacuum pump 103 is adjusted by a pressure adjusting valve 86, so that the inside of each liquid condenser 10 is decompressed to a predetermined pressure. In addition, each liquid condenser 10 is heated by the warm water circulated from the warm water circulation system 94. The temperature of the warm water supplied by the warm water circulation system 94 is set lower than the boiling point thereof at the pressure adjusted by the pressure adjusting valve 86. The warm water circulation system 94 supplies the warm water at a temperature lower than its boiling point to the liquid condensers 10, and indirectly heats the vinegar introduced to the liquid condensers 10 with the supplied warm water. As a result, it is possible to evaporate the volatile component in the liquid at a temperature equal to or lower than 100

Due to the following reasons, the liquid is heated at 100
a high temperature, a raw material thereof possibly denatures depending on the kind of liquid. In addition, in order to heat the liquid at a high temperature, high heat energy is necessary. In order to avoid these problems, the pressure of the inside of each liquid condenser 10 is decompressed to as low as about a few kPa by discharging the air in the liquid condensation system 1 from the outlet side of the liquid condensation system 1 with the vacuum pump 103, so that the boiling point of the liquid introduced inside each liquid condenser 10 is lowered in the embodiment. It should be noted that the warm water is used as a heating source for heating the liquid condensers 10 in the embodiment, but high-temperature vapor or decompressed low-temperature vapor may be used instead of the warm water if higher heat energy is necessary.

The condenser-temperature sensor 202 that measures the temperature of the inside of each liquid condenser 10 is attached to the liquid condenser 10. In the case where the temperature of the liquid condenser 10 is about to exceed 70
amino acid contained in the vinegar denatures due to changes in the processing amount or the like, the control unit 200 controls the warm water circulation system 94 so as to lower the temperature of the warm water.

Inside the liquid condensers 10, the evaporated volatile component is separated from the condensed liquid that remains in a liquid state. The vapor and liquid that are separated from each other are further carried to the subsequent units by the gravity, a pressure difference caused by decompression by the vacuum pump 103, and pressurization by the flow-rate adjusting pumps 93. The separated vapor is further carried to the subsequent units through a vapor discharge pipe 17 provided at the bottom of each liquid condenser 10, and the separated liquid is carried to the subsequent units through a condensed-liquid discharge pipe 18.

The vapor of the evaporated volatile component is moved to the heat exchangers 95 that cool the same down to its dew point or lower for liquefaction, and the heat of the evaporated volatile component is absorbed by the cooling water supplied from the cooling water circulation system 96. Accordingly, the evaporated volatile component becomes again a liquid state and is stored in the vapor liquid tank 97 through a pipe 17b. A manometer (vacuum gauge) 85 that measures the pressure inside the liquid condenser 10 and the pressure adjusting valve 86 that controls the pressure inside the liquid condenser 10 are attached to each pipe 17 that connects the liquid condenser 10 to the heat exchanger 95. An output of the manometer 85 is input to the control unit 200 and the control unit 200 performs feedback control of the opening of the pressure adjusting valve 86.

When obtaining the condensed liquid, particularly, the condensed liquid with a high concentration, it is necessary to prevent the volatile component once separated from being mixed with the condensed liquid again. Due to this reason, two vapor flow-in prevention valves 98a and 98b, each of which adjusts pressure loss in the condensed-liquid line and prevents the vapor from flowing back to the condensed-liquid line, are provided along each condensed-liquid line that couples the condensed-liquid tank 100 to the liquid condenser 10. The vapor flow-in prevention valves 98a and 98b are controlled by the control unit 200. The condensed liquid is stored in the condensed-liquid tank 100.

When starting the condensation process, the vapor flow-in prevention valve 98a on the upstream side is in an open state, and the vapor flow-in prevention valve 98b on the downstream side is in a closed state. As will be described later, each liquid condenser 10 is vertically arranged, so that when an undiluted solution is condensed in the vertical state, the condensed liquid falls by the gravity to be accumulated inside the transparent pipe 99, and the vapor is moved to the heat exchanger 95 by the sucking force of the vacuum pump 103.

When the condensation process is further continued, the transparent pipe 99 is gradually filled with the condensed liquid, so that the condensed-liquid level sensor 203 attached to each transparent pipe 99 reacts. The control unit 200 that receives a signal from the condensed-liquid level sensor 203 allows the vapor flow-in prevention valve 98a on the upstream side to be in an open state, and then the vapor flow-in prevention valve 98b on the downstream side to be in a closed state. Accordingly, the condensed liquid accumulated in each transparent pipe 99 is moved to the condensed-liquid tank 100 without being mixed with the vapor. After a predetermined period of time passes, the control unit 200 allows the vapor flow-in prevention valve 98b on the downstream side to be in a closed state and the vapor flow-in prevention valve 98a on the upstream side to be in an open state, and waits until the condensed liquid is accumulated again. As described above, by controlling the vapor flow-in prevention valves 98a and 98b, the liquid condensation system reliably performs vapor-liquid separation, and thus it is possible to obtain the condensed liquid with a high concentration.

It should be noted that since an optical sensor utilizing transmitted light is employed as the condensed-liquid level sensor 203, the transparent pipe 99 is provided in the embodiment. However, when another sensor (for example, float type water-level sensor) is used, it is not necessary to be transparent.

In addition, the pressure inside each liquid condenser 10 and the temperature of the circulated warm water are input to the control unit 200 to control the pressure adjusting valve 86. However, the pressure adjusting valve 86 may be manually adjusted without providing the control unit 200. This is effective in the case where only a particular liquid is used as a liquid to be condensed and most of the conditions of condensation are already known, and an expensive control unit is not necessary, thus leading to cost reduction.

The vapor liquid and the condensed liquid that are collected from the respective liquid condensers 10 to be stored in the vapor liquid tank 97 and the condensed-liquid tank 100, respectively, are finally carried to the storage containers 102 under the atmospheric pressure by the vacuum pumps 101, and then the liquid condensation process is completed. When the vinegar is condensed to a certain concentration or higher, its viscosity becomes high, resulting in feeding trouble. As a countermeasure against this phenomenon, in addition to the shape inside the liquid condenser 10 to be described later, the temperature-adjusting heaters 204 are attached to the condensed-liquid tank 100 and the condensed-liquid flow channels represented by the double lines in Fig. 1 ranging from the liquid condensers 10 to the storage container 102 via the discharge pump 101, so that the viscosity can be reduced and the liquid can be easily fed by heating the condensed liquid. The temperature of each heater is controlled by the control unit 200 on the basis of information from the temperature-adjusting temperature sensors 205, and the temperature of the condensed liquid can be adjusted to a desired one.

The liquid condensation system performs the liquid condensation by the above-described steps. Only by setting initial conditions such as the flow rate of the liquid and the temperature of the warmwater, the control unit 200 automatically controls the whole process during condensation, and thus no operators are required. In addition, long-time continuous processes can be easily carried out. Further, since the control unit 200 can store a production condition under which the condensation was carried out once, it is possible to start the condensation process more quickly for the next time and later with good repeatability.

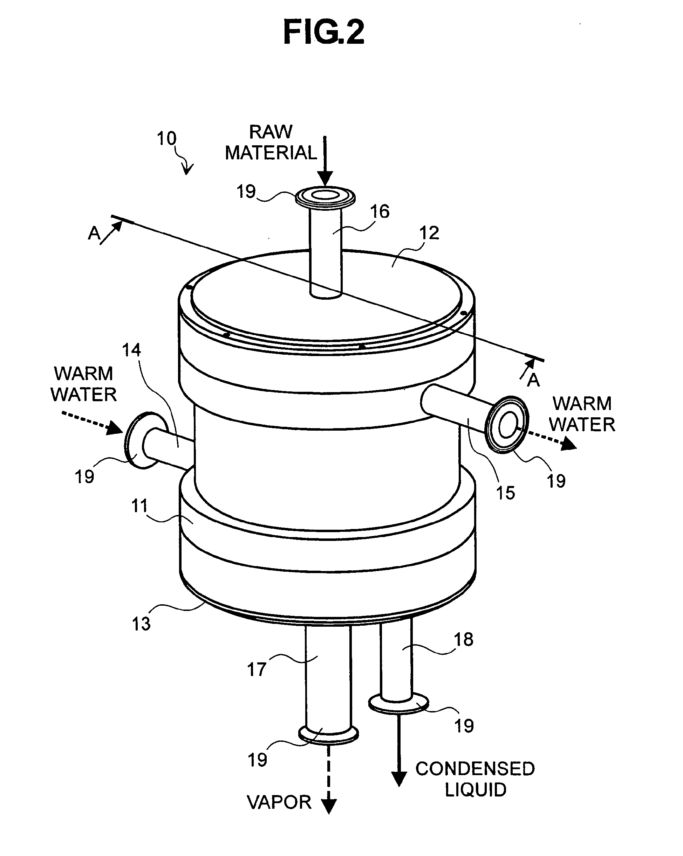

Next, the liquid condenser 10 will be described in detail. Fig. 2 is an exterior perspective view of the liquid condenser 10. The liquid condenser 10 has a cylindrical shape in which an upper lid 12 and a lower lid 13 are attached to a pipe-shaped outer pipe 11 by using screws for closure, and is vertically arranged in the axis direction of the cylinder as shown in Fig. 2.

A warm water supplying pipe 14 that serves as an inlet of the warm water is attached to a lower portion of the outer pipe 11. A warm water discharge pipe 15 that serves as an outlet of the warm water is attached to an upper portion of the outer pipe 11. The warm water supplied from the warm water circulation system 94 is allowed to circulate into the liquid condenser 10 for heating. A raw material supplying pipe 16 is attached to the upper lid 12. The vinegar that is supplied from the flow-rate adjusting pump 93 is supplied inside the liquid condenser 10. The vapor discharge pipe 17 and the condensed-liquid discharge pipe 18 are attached to the lower lid 13, and serve as flow channels through which the vapor and the condensed liquid separated in the liquid condenser 10 are moved to the subsequent units. A sanitary flange 19 is provided at a tip end of each pipe so as to facilitate connection with other devices.

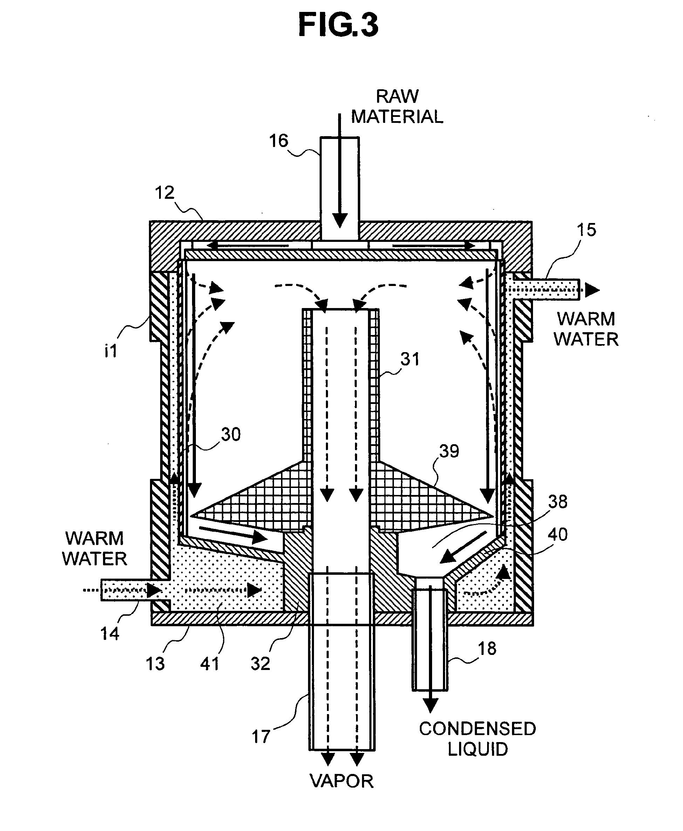

Fig. 3 is a cross sectional view of the liquid condenser 10 taken along the line A-A in Fig. 2. The liquid condenser 10 includes the outer pipe 11, a groove-formed pipe 30 where the liquid is evaporated, and an inner pipe 31 and an inner pipe base 32, which form a triple-pipe structure, and the groove-formed pipe 30 is in communication with the inner pipe 31. The inside of the liquid condenser 10 is decompressed by the vacuum pump 103.

The groove-formed pipe 30 and the inner pipe base 32 are not in communication with the outer pipe 11 by an O ring, and the warm water is circulated from the lower side to the upper side in a space between the groove-formed pipe 30 and the inner pipe base 32, as shown by the dotted lines in Fig. 3. Accordingly, the groove-formedpipe 30 and the innerpipe base 32 are uniformly heated, and heat energy necessary for evaporation and reduction in viscosity of the condensed liquid is given thereto. The inlet and outlet for the warm water may be reversely arranged. However, in order to uniformly fill the space with the warm water, it is desirable to circulate the warm water from the lower side to the upper side as in the embodiment. In addition, for stable condensation, it is desirable to flow a sufficient amount of warm water enough not to cause a temperature difference between the outlet and the inlet for the warm water even if energy is consumed by evaporation or the like. In the embodiment, the warm water is fed at a flow rate of 15L/min with respect to a processing amount of 10ml/min.

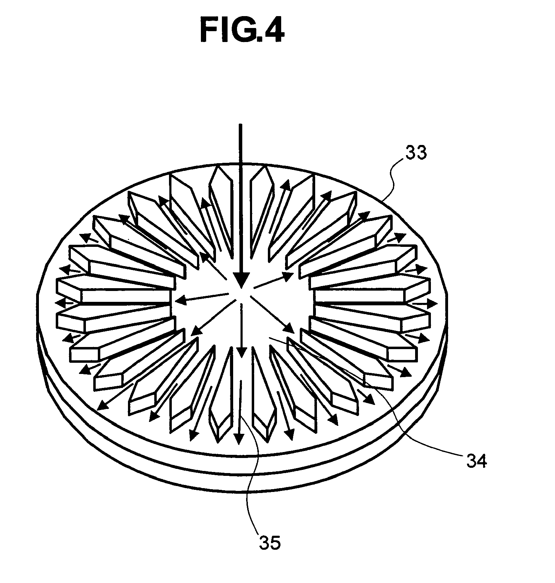

Fig. 4 is a perspective view of an upper lid 33 for the groove-formedpipe fitted into an upper end of the grooved-formed pipe 30. As will be described later, in order to evaporate the liquid in the grooved-formed pipe 30, it is necessary to uniformly feed the liquid to the circumference of the groove-formed pipe 30, so that the following structure is employed. The upper lid 33 for the grooved-formed pipe is a circular member including a buffer portion 34 located at its center portion and plural liquid-led grooves 35 expanding in a radial manner to the circumference direction from the buffer portion. An upper surface of the upper lid 33 for the groove-formed pipe is brought into contact with a lower surface of the upper lid 12. By using the upper lid 12 as a lid member, the buffer portion 34 and the liquid-led grooves 35 form the flow channels. The vinegar discharged through the raw material supplying pipe 16 is fed to the center portion of the upper lid 33 for the groove-formed pipe, as shown by the arrow lines in Fig. 4.

Each of the liquid-led grooves 35 is sufficiently smaller relative to the buffer portion 34, so that the vinegar does not enter the liquid-led grooves 35 until the buffer portion 34 is filled with the vinegar due to the difference of pressure loss. The vinegar with which the buffer portion 34 is filled is pressurized by vinegar that follows, and is moved while uniformly filling the respective liquid-led grooves 35. Then, the vinegar is uniformly fed to the circumference of the grooved-formed pipe 30 that is the subsequent unit, and falls along a wall face. At this time, in order to realize uniform feeding to the circumference, it is desirable that the upper lid 33 for the groove-formed pipe be horizontally maintained. Therefore, it is desirable that the liquid condenser 10 be vertically attached. In addition, if a food product in a liquid state is to be condensed, it is necessary to completely remove a liquid remaining after the condensation process. In the structure of the embodiment, the liquid hardly stays in the liquid condenser, as compared to a system in which a concave buffer tank is provided. Therefore, if a cleaning liquid is fed when cleaning the liquid condenser 10, a remaining liquid can be easily removed, which is excellent in maintenance.

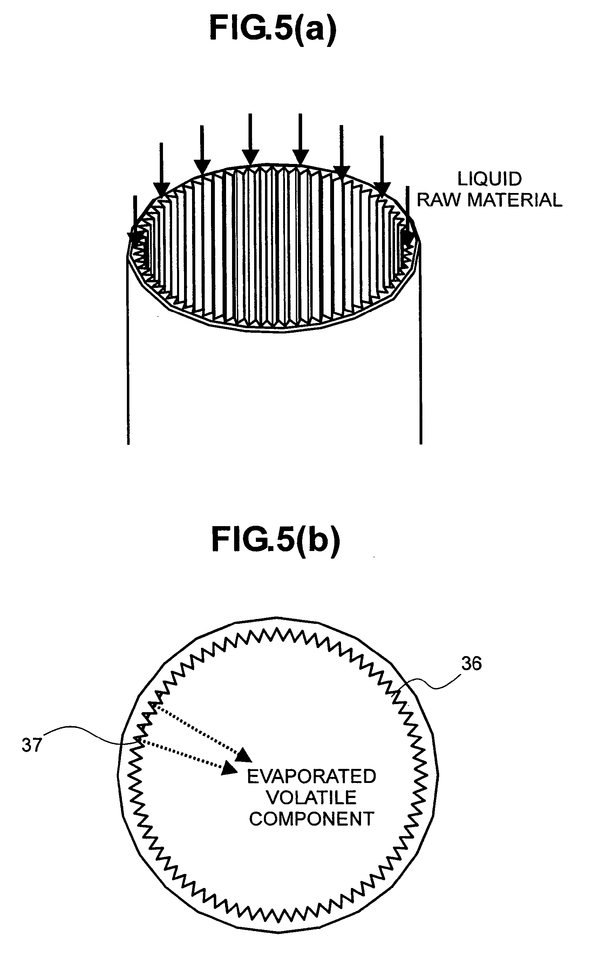

Fig. 5A is a perspective view of the groove-formed pipe 30, and Fig. 5B is a top plan view thereof. The groove-formed pipe 30 is provided with plural fine grooves 36 along its inner circumference as shown in Figs. 5A and 5B. The vinegar that is uniformly fed to the circumference of the groove-formed pipe 30 via the upper lid 33 for the groove-formed pipe is trapped by a wall face of each fine groove 36 due to the surface tension so as to form a thin membrane 37. Then, the vinegar falls downward along the wall face of the groove-formed pipe 30.

The shape of the cross section of each fine groove 36 is determined in consideration of that the thin membrane 37 is easily formed (the surface tension enough to hold the liquid in the grooves is secured), and in consideration of heat transference by which heat energy necessary for evaporation is sufficiently transferred. The shapes and sizes of the grooves are not particularly limited as long as these conditions are satisfied. However, in consideration of workability, a rectangular shape, a triangular shape, a semicircular shape, a trapezoidal shape, and the like each with a size ranging from several hundred µm to a fewmm are preferable. In the embodiment, the cross section thereof is formed in a triangular shape (V-shape) with a side of 1.62 mm so that the thin membrane 37 is easily formed and work of the fine grooves is easily performed. The groove-formed pipe 30 is heated by the warm water from the outside. The thin membranes of the vinegar in the fine grooves 36 are high in reactivity to temperature. Further, since the inside of the groove-formed pipe 30 is decompressed, the evaporation starts at a temperature lower than that under a normal pressure. As a result, the volatile components (mainly, water and acetic acid) that are contained in the vinegar evaporate before the liquid reaches a lower portion of the groove-formed pipe 30. The evaporation amount can be arbitrarily changed by controlling the supplying amount of the liquid and the temperature of the warm water.

In the system, the evaporation is separately performed in each of the fine grooves 36, so that the processing amount of the liquid is in proportion to the number of grooves. That is, once an evaporation amount per one fine groove 36 is obtained under a certain condition, the liquid condensers with different processing amounts can be easily obtained by increasing or decreasing the number of grooves. In the embodiment, a small model capable of processing a condensed liquid with the concentration increased by 7 times at a rate of 20 ml/min was manufactured and its performance was verified. Thereafter, a model which is capable of processing a condensed liquid at a rate of 100 ml/min and inwhich the diameter of the groove-formed pipe 30 was made large to.increase the number of grooves by five times was manufactured, and then it was found that the latter model could produce a condensed liquid with the concentration increased by seven times, similarly to the small model. In order to realize the above, the amount of the liquid supplied to each groove needs to be uniformed to equalize the evaporation conditions. Therefore, the buffer portion 34 and the liquid-led grooves 35 are provided on the upper lid 33 for the groove-formed pipe, as described above, in the embodiment.

Returning to Fig. 3, the condensed liquid obtained after evaporating the volatile component while allowing the liquid to fall along the groove-formed pipe 30 is moved to a space (condensed-liquid buffer portion 38) formed between the inner pipe 31 and the inner pipe base 32, as shown by the solid arrows, and is discharged to the outside of the liquid condenser 10 via the condensed-liquid discharge pipe 18. The inner pipe 31 has a shape with a guard of a sword attached to a circular pipe. As shown in Fig. 3, the inner pipe 31 has no horizontal faces, and all faces thereof areverticallyorientedor inclined. In addition, all faces of the inner pipe 31 are treated by mirror polishing. Accordingly, even when the liquid in process of condensation splashes from the fine grooves 36 to be attached to the inner pipe 31, the liquid flows along an inner-pipe inclined channel 39 to be moved to the condensed-liquid buffer portion 38. As a result, no liquid remains. If the liquid remains, the stability of the condensation deteriorates due to variation in liquid amounts supposed to flow into the condensed-liquid lines. In addition, the remaining liquid dries and is attached to the inside of the pipe to the extent that it is not easily cleaned. The embodiment does not involve such problems.

An inclined channel 40 formed in a mortar shape is attached, toward the condensed-liquid discharge pipe 18, to a portion on an upper surface of the inner pipe base 32 with which the condensed liquid is brought into contact, and the surface thereof is treated by mirror polishing. As a result, the condensed liquid that falls along the fine grooves 36 smoothly moves outside the liquid condenser without remaining therein. If the vinegar is condensed to a high concentration, the viscosity thereof rapidly increases and the vinegar becomes thick. In order to deal with such a state of liquid, a space 41 through which the warm water flows is provided on a rear surface of the mortar-shaped inclined channel 40. As a result, the mortar-shaped inclined channel 40 is heated by the warm water that flows in the space 41, and at the same time, the condensed liquid with a high concentration that flows on the inclined channel is also heated. The viscosity of the heated condensed liquid is reduced and the condensed liquid is discharged to the outside of the liquid condenser thanks to slipperiness of the inclined channel whose surface is treated by mirror polishing. Such a shape enables production of a sample of vinegar with the concentration increased by 20 times in the embodiment.

On the other hand, the evaporated volatile component is moved to the vapor discharge pipe 17 via the inner pipe 31 by the sucking force of the vacuum pump 103 as shown by the dashed arrows. By providing the inner pipe 31 higher so as to protrude inside the groove-formed pipe 30, even if the condensed liquid enters the groove-formed pipe 30 across the condensed-liquid buffer portion 38, the condensed liquid cannot easily flow into the vapor discharge pipe 17. The vapor of the volatile component sucked to the vapor discharge pipe 17 is cooled and liquefied by the heat exchanger 95, and is stored in the vapor liquid tank 97. At this time, since the vapor flow-inpreventionvalves 98a and 98b are provided to the line through which the condensed liquid flows as described above, the vapor is prevented from flowing back to the condensed-liquid discharge pipe 18 by appropriately opening and closing two valves.

According to the above-described embodiment, the liquid condenser 10 has no movable portions and has a static structure in which the members inside the liquid condenser 10 do not move during the liquid condensation, a trouble caused by movable portions can be prevented, thus improving the reliability. In addition, the vacuum pressure inside the evaporation space and the temperature of a surface on which the liquid is evaporated can be automatically adjusted, so that even if the liquid to be condensed is a substance that possibly denatures at a high temperature, the liquid can be condensed under temperature conditions where the substance is not denatured.

Further, since the condensation can be continuously performed by the flowing process, a large amount of liquid can be condensed by continuously operating the liquid condensers although they are small in size. In addition, by adjusting the temperatures of all portions with which the condensed liquid is brought into contact, the condensed liquid with a high concentration and a high viscosity can be produced, and various condensation processes can be performed.

Although there has been described the liquid condensation system for obtaining the condensed liquid by evaporating vinegar in the embodiment, a vapor liquid, namely, a distillate is produced at the same time in the vapor liquid tank 97, so that the liquid condensation system canbe used as a distillation system.

## Claims

1. A liquid condensation system including liquid condensers (10) which evaporates a volatile component of a liquid to be processed under a decompressed atmosphere to condense the liquid, the system comprising:
decompressing means (103) which decompresses the inside of each liquid condenser;
heating means (94) which is provided for separating the volatile component from the liquid to be processed in each liquid condenser;
cooling means (96) which cools the component volatilized from the liquid to be processed;
a condensed-liquid buffer tank (102) which collects a condensed liquid produced by volatilizing and condensing the volatile component from the liquid to be processed;
vaporliquidbuffertank (97) which collects a vapor liquid produced from the volatile component cooled by the cooling means;
measuring means (202, 205) which measures the concentration of the condensed liquid and the temperature of each liquid condenser; and
control means (200) which controls the concentration of the condensed liquid on the basis of the temperature of each liquid condenser measured by the measuring means.

2. The liquid condensation system according to claim 1,
wherein each liquid condenser has a triple-pipe structure configured by arranging three pipes (11, 30, 310) with different diameters, the heating means can supply a high-temperature heating medium to a space surrounded by an outer pipe and an intermediate pipe, the decompressing means can decompress a space between the intermediate pipe and an inner pipe and the inside of the inner pipe, a lid member (33) through which the liquid to be processed flows is arranged at an upper end of the intermediate pipe, a plurality of fine grooves (35) arranged in a radial manner are formed on the lid member, a plurality of fine grooves are formed on an inner circumferential face of the intermediate pipe, and after the liquid is fed to the entire circumference of the intermediate pipe by utilizing a capillary phenomenon, the liquid to be processed is evaporated in the grooves of the intermediate pipe so as to be collected by the inner pipe.

3. The liquid condensation system according to claim 1 or 2,
wherein a buffer portion is provided at a condensed-liquid discharge pipe of each liquid condenser, openable and closable valves are arranged on the inlet side and the outlet side of the buffer portion, and vapor is prevented from being mixed with the condensed liquid by alternately opening and closing the valves.

4. The liquid condensation system according to any one of claims 1 to 3,
wherein a bottom face of the intermediate pipe of each liquid condenser is provided as an inclined face whose surface is treated by mirror polishing, and the heating means heats the inclined face to reduce the viscosity of the condensed liquid.

5. The liquid condensation system according to claim 1,
wherein a plurality of liquid condensers are provided, buffer means is provided on the upstream side of the plurality of liquid condensers, and the liquid to be processed is led to the plurality of liquid condensers inparallel from the buffer means.

6. The liquid condensation system according to claim 1,
wherein each liquid condenser includes: a groove-formed pipe having a plurality of grooves extending in the vertical direction formed on the inner circumferential side; an outer pipe which is substantially concentric with the groove-formed pipe and is arranged on the outer circumferential side of the groove-formed pipe; and a member which is arranged at a substantially center portion on the inner circumferential side of the groove-formed pipe and leads the volatile component of the liquid to be processed supplied to the inside of the groove-formed pipe to the outside, a space separated from the inside of the groove-formed pipe is formed between the grooved-formed pipe and the outer pipe, the heating means supplies warm water to the space, means for measuring the pressure of the inside of the groove-formed pipe and a member through which the volatile component of the liquid to be processed flows are provided to each liquid condenser, and a flow rate adjusting valve is provided along the member.

7. The liquid condensation system according to claim 6,
wherein outputs of the pressure measuring means and the temperature measuring means are input to the control means so as to control the flow rate adjusting valve.

8. A liquid condensation method by which a volatile component of a liquid to be processed is evaporated under a decompressed atmosphere to condense the liquid using liquid condensers,
wherein warm water is supplied from a lower portion of an outer pipe to a space formed between the outer pipe and a groove-formed pipe of each liquid condenser and is discharged from an upper portion of the outer pipe, the warm water is circulated by a warm water circulation system, and the pressure of a processing space formed on the inner circumferential side of the groove-formed pipe included in each liquid condenser is adjusted on the basis of a measured temperature of the circulated warm water.

9. The liquid condensation method according to claim 8,
wherein a flow rate adjusting valve is attached to each liquid condenser, the pressure of the processing space is controlled by adjusting the opening of the flow rate adjusting valve, and a liquid surf ace of the liquid tobe processed supplied to the groove-formed pipe is evaporated without boiling.

10. The liquid condensation method according to claim 9,
wherein vacuum discharge means is attached to the liquid condensers, and the pressure of the processing space is allowed to be a decompressed atmosphere by the vacuum discharge means.

11. A liquid condensation system including one or more liquid condensers (10) which evaporate a volatile component of a liquid to be processed under a decompressed atmosphere to condense the liquid, the system including:
decompressing means (103) for decompressing the inside of each liquid condenser;
heating means (94) for separating the volatile component from the liquid to be processed in each liquid condenser; and
cooling means (96) for cooling the component volatilized from the liquid to be processed,
wherein one or more of the liquid condensers have a triple-pipe structure configured by arranging three pipes (11, 30, 31) with different diameters, the heating means (94) being adapted to supplying a high-temperature heating medium to a space surrounded by an outer pipe (11) and an intermediate pipe (30), and the decompressing means being adapted to decompressing a space between the intermediate pipe (30) and an inner pipe (31) and the inside of the inner pipe (31).
